# EUROPÄISCHE PATENTANMELDUNG

(11) **EP 4 249 150 A1**
(43) Veröffentlichungstag der Anmeldung: **27.09.2023**
(21) Anmeldenummer: 22164331.5
(22) Anmeldetag: 25.03.2022
(51) Int. Cl.: B22F 5/00, B22F 7/06, C22C 33/02, C22C 38/44, H02K 1/02, H02K 1/06, H02K 15/02

(54) **SINTERMETALL-BAUTEIL**

(71) Anmelder: Siemens Aktiengesellschaft, 80333 München (DE)
(72) Erfinder: Rieger, Gotthard, 80636 München (DE)
(74) Vertreter: Siemens Patent Attorneys

(57) **Zusammenfassung**

Die Erfindung betrifft ein Sintermetall-Bauteil umfassend zwei funktionale, voneinander getrennte, aneinander angrenzende Materialkomponenten (4, 6), wobei eine magnetische Materialkomponente (4) einen ferromagnetischen Eisenwerkstoff umfasst und eine tragende Materialkomponente (6), die eine Eisen-Chrom-Legierung umfasst. Die Erfindung zeichnet sich dadurch aus, dass die tragende Materialkomponente ein Gefüge (8) mit einer austenitische Phase (10) und eine ferritische Phase (12) aufweist, wobei die Volumenanteile der ferritischen Phase (12) am Gefüge (8) zwischen 60 Volumen % und 80 Volumen % betragen und die Volumenanteile der austenitischen Phase (10) zwischen 20 Volumen % und 40 Volumen % betragen.

## Beschreibung

### Die Erfindung betrifft ein Sintermetall-Bauteil nach dem Oberbegriff des Patentanspruchs 1

Insbesondere in elektrischen Maschinen befinden sich Komponenten, wie beispielsweise Rotoren, an die hohe Anforderungen bezüglich mechanischer Eigenschaften, insbesondere der Festigkeit bei gleichzeitig hohem magnetischem Moment gestellt werden. Reine ferritische Stähle, die aus magnetischen Gründen vorteilhaft sind z. B. Reineisen, erfüllen die Festigkeitsanforderungen bei Hochleistungsmotoren nur schlecht.

In konventionellen elektrischen Maschinen, beispielsweise Generatoren oder Elektromotoren, insbesondere asynchron-, reluktanz- und permanentmagneterregten Motoren werden ferritische Eisen-Silicium-Bleche eingesetzt, die einen Kompromiss zwischen reduziertem magnetischem Moment, guten Verlusteigenschaften durch erhöhten elektrischen Widerstand und erhöhter Festigkeit darstellen.

Es werden bei den Magnetblechen, die zu einem Magnetblechpaket zusammengefasst sind und somit eine wesentliche Komponente des Rotors bilden, auch hybride und im speziellen kogesinterte Komponenten eingesetzt. Es werden also verschiedene Materialien verwendet, die zum einen eher magnetische Eigenschaften erfüllen und zum anderen mechanische Eigenschaften erfüllen. Hierbei werden entweder hohe Spannungszustände durch unangepasste thermische Ausdehnung akzeptiert oder für den nicht magnetischen Teil Werkstoffsysteme angewandt, die entweder einen hohen Ferritanteil in Form von rundlichen α-Eisen-Kristalliten besitzen und daher zu Streufeldern und daher Verlusten des magnetischen Flusses in der nicht magnetischen Komponente führen oder es werden Nickelbasislegierungen angewandt, die stark abweichende Sintereigenschaften aufweisen und aufgrund der Kostenstruktur unwirtschaftlich sind.

Eine weitere Möglichkeit zur Anpassung der thermischen Ausdehnungskoeffizienten in unterschiedlichen Materialsystemen in einem Bauteil besteht darin, Übergangsschichten einzubringen, wodurch der Herstellungsaufwand jedoch erheblich erhöht wird und die Planarität der Elektrobleche negativ beeinflusst wird.

Bei den beschriebenen Elektroblechen für elektrische Maschinen handelt es sich hierbei lediglich um ein Beispiel um die Problematik bei der Anforderung von hohen Festigkeiten einerseits und hohen magnetischen Eigenschaften andererseits in einem Bauteil zu beschreiben.

Daher besteht die Aufgabe der Erfindung darin, ein Bauteil bereitzustellen, das lokal sehr gute magnetische insbesondere weichmagnetische Eigenschaften aufweist und das eine sehr hohe mechanische Belastbarkeit mit sich bringt.

Die Lösung der Aufgabe besteht in einem Sintermetall-Bauteil mit den Merkmalen des Patentanspruchs 1.

Das Sintermetall-Bauteil umfasst dabei zwei funktionale, voneinander getrennte, aneinander angrenzende Materialkomponenten. Dabei handelt es sich zum einen um eine magnetische Materialkomponente, die einen ferromagnetischen Eisenwerkstoff umfasst. Zum anderen handelt es sich um eine tragende Materialkomponente, die insbesondere auf mechanische Festigkeit ausgelegt ist, wobei diese tragende Materialkomponente einer Eisen-Chrom-Legierung umfasst. Diese tragende Materialkomponente weist dabei ein Gefüge auf, das eine austenitische Phase und eine ferritische Phase umfasst. Unter diese Bedingung fallen in der Praxis beispielsweise die als solche bezeichneten Duplex-Stähle. Ferner zeichnet sich das Gefüge der tragende Materialkomponente noch dadurch aus, dass Volumenanteile der ferritischen Phase am Gefüge zwischen 60 Vol. % und 80 Vol. % betragen. Die Volumenanteile der austenitischen Phase hingegen betragen im Gefüge zwischen 20 Vol. % und 40 Vol. %.

Es hat sich herausgestellt, dass insbesondere Werkstoffe mit einem sehr hohen Eisengehalt, die die besonders guten weichmagnetischen Eigenschaften aufweisen, die für die Anwendung in einem Bauteil für elektrische Maschinen erforderlich sind, einen Ausdehnungskoeffizienten haben, der in der Regel zwischen 10 × 10-6 1/K und 15 × 10-6 1/K aufweisen. Die beschriebenen mechanischen Komponenten, also Stähle, die sowohl eine ferritische als auch eine austenitische Phase in den beschriebenen Anteilen aufweisen, können durch gezielte Auswahl in den beschriebenen Bereichen mit einem nahezu identischen Ausdehnungskoeffizienten eingestellt werden. Dabei überwiegt die ferritische Phase in dem beschriebenen Gefüge der tragenden Materialkomponente, die ferritische Ausscheidungen in dem austenitischen Matrixanteil ist jedoch aufgrund der austenitischen Phase in der Art blockiert, sodass keine Ummagnetisierungen der ferritischen Phasenanteile entstehen können, wodurch die Flussführung des magnetisch geprägten Materialanteil des Bauteils nicht negativ beeinflusst wird.

Ein weiterer Vorteil des beschriebenen Bauteils besteht darin, dass beide verwendeten Materialkomponenten, sowohl die magnetische Materialkomponente als auch die tragende Materialkomponente auf Eisenbasis bestehen und durch einfache Maßnahmen wie die Zugabe von Sinterhilfmitteln in ihrem Schwindungsverhalten angepasst und daher in einem einzigen Sinterprozess hergestellt werden können, sodass sich das gewünschte Gefüge der tragenden Komponente ausbildet. Einerseits durch das Sinterverfahren, andererseits durch Auswahl der beschriebenen Materialkomponenten lässt sich somit ein Bauteil herstellen, das sowohl sehr hohen mechanischen Belastungen standhält und in den gewünschten Regionen dabei sehr gute weichmagnetische Eigenschaften aufweist, was insbesondere auch durch die beschriebenen Materialkomponenten mögliche Adaption der Ausdehnungskoeffizienten bewirkt wird.

Im Weiteren sei darauf hingewiesen, dass in Bezug auf Gefügebilder und Phasenanteile in einem bestimmten Phaseninnengefüge die Einheit Vol. % verwendet wird, bei noch zu beschreibenden Legierungsanteilen wird von Gewichtsprozent gesprochen. Diese Unterscheidung ist fachspezifisch üblich und macht insbesondere bei den Legierungen insofern Sinn, dass hier tatsächlich eine Masse im Vergleich zu einer anderen Masse der Legierung steht. Bei Gefügebildern, in denen bei bestimmten Phasen verschiedene Elemente beteiligt sind, ist die Angabe von Gewichtsprozent nicht zweckmäßig, da diese ständig variieren kann und zu ungenau wäre, weshalb bei diesen Angaben die Vol. % angewendet werden.

Im Weiteren wird zur Analyse der Phasenanteile ein planarer Schliff durch das Material angefertigt und mit einem Auflichtmikroskop über eine Bildbearbeitungssoftware ausgewertet. Für die Bildverarbeitung kann beispielsweise sowohl ein Mikroskop der Firma Zeiss als auch die hierzu vorhandene Software ZEN angewendet werden.

In einer vorteilhaften Ausgestaltungsform der Erfindung weist die magnetische Materialkomponente einen Eisenanteil auf, der höher als 95 Gew.-%, insbesondere die Höhe von 98 Gew.-% ist. Üblicherweise ist eines der verbleibenden Legierungselemente Silicium, es bleibt jedoch festzuhalten, dass Reineisen gegebenenfalls mit einer Legierung von Kobalt bis zu 50 Gew. % noch bevorzugtere weichmagnetische Eigenschaften aufweist.

In einer weiteren vorteilhaften Ausgestaltungsform weist der ferritische Phasenanteil des Gefüges der tragenden Materialkomponente eine whiskerförmige Gestalt mit einem Aspektverhältnis von größer als 5 auf. Unter whiskerförmig wird dabei verstanden, dass sich in einer möglichst homogenen Matrix, die durch den austenitischen Phasenbestandteil gebildet wird, längliche Ausscheidungen mit der kubisch raumzentrierten Ferritstruktur ausbilden. Diese sind dabei zu einem großen Teil in einer Länge vorliegend, die zwischen 100 µm und 300 µm liegt. Dieser Längenanteil der whiskerförmigen ferritischen Ausscheidungen liegt bevorzugt bei ca. 70 Vol. %. Das heißt 70 % der ferritischen whiskerförmigen Strukturbestandteile liegen in der Länge 100 µm und 300 µm vor. Auch derartige Gefügecharakteristika werden anhand der beschriebenen Bildanalyse eines Schliffbildes dargelegt.

Die Eisen-Chrom-Legierung der tragenden Materialkomponente weist dabei einen Chromanteil zwischen 22 Gew. % und 28 Gew. % auf, insbesondere liegt dieser zwischen 24 Gew. % und 26 Gew.%. Das Chrom ist dabei ein Ferritbildner, der bei einer entsprechenden Abkühlung aus dem Sinterprozess die Ausbildung von Ferritkristallen begünstigt. Ferner weist die Legierung einen Nickelanteil auf, der zwischen 4 Gew. % und 10 Gew.% beträgt, insbesondere zwischen 6 Gew.% und 8 Gew.%. Nickel hingegen ist ein sogenannter Austenitbildner, der bei der Abkühlung die austenitischen Phasenbestandteile begünstigt. Beide Phasenbestandteile, Austenit und Ferrit, sind wie bereits dargelegt, wesentliche Bestandteile im Gleichgewicht der tragenden Materialkomponente, da durch die beschriebenen Verhältnisse sowohl urmechanische Festigkeiten als auch weichmagnetisches Verhalten verhindert wird. Derartige Chrom-Nickel-Stähle, die auch als Duplex-Stähle bekannt sind, weisen neben einer hohen Zugfestigkeit auch eine verhältnismäßig hohe Duktilität auf, weshalb sie besonders gut als tragende Komponente für das beschriebene Sintermetall-Bauteil geeignet sind.

Ferner umfasst die Eisen-Chrom-Legierung in vorteilhaften Ausgestaltungsformen sowohl Molybdän in Anteilen zwischen 2 Gew. % und 5 Gew. %, insbesondere zwischen 3 Gew. % und 4 Gew. %. Der Anteil an Wolfram beträgt bevorzugt zwischen 0,3 Gew. % und 1,2 Gew. %, insbesondere zwischen 0,5 Gew.% und 1 Gew.%. Die beiden zuletzt genannten Legierungsbestandteile Molybdän und Wolfram tragen zum einen zu einer höheren Festigkeit der Legierung bei, zum anderen sind sie dazu geeignet, insbesondere den gewünschten Ausdehnungskoeffizienten, der nahe an den der magnetischen Komponente liegt, einzustellen.

Eine weitere Maßnahme, um auf die Feineinstellung des Ausdehnungskoeffizienten Einfluss zu nehmen, ist die Einlagerung von Partikeln, insbesondere keramischen Partikeln in der austenitischen Phase. Diese Einlagerungen von Partikeln weisen dabei einen Volumenanteil auf, der zwischen 5 und 20 Vol. % liegt. Als keramische Partikel haben sich insbesondere Siliciumcarbid Yttrium-stabilidertes Zirkonoxid, TiC und SiC-Partikel bewährt.

Das beschriebene Sintermetall-Bauteil ist dabei insbesondere ein flächiges Bauteil. Dabei grenzen die beschriebenen Materialkomponenten, die magnetische Komponente und die tragende Komponente, in der Regel so aneinander, dass sie an ihren stumpfen Stirnflächen aneinanderstoßen. Gerade in diesen Grenzflächen ist es wichtig, dass der Ausdehnungskoeffizient zwischen den beiden Materialkomponenten möglichst geringe Unterschiede aufweist, damit in diesen verhältnismäßig kleinen Stirnflächen und geringen Übergangszonen keine oder nur sehr geringe mechanische Spannungen durch unterschiedliche Ausdehnungskoeffizienten auftreten. Dies gilt vor allem in der Herstellung bei der gemeinsamen Abkühlung nach dem Sinterprozess als auch in Bezug auf die Dauerfestigkeit im Betrieb.

Ein derartiges flächiges Bauteil ist besonders gut durch ein Siebdruck- und/oder Schablonendruckverfahren herstellbar. Hierbei fällt der Begriff Siebdruck unter den Oberbegriff Schablonendruck, wobei durch ein Sieb oder durch eine geöffnete Schablone eine Paste mit dem funktionalen Bestandteil der Komponenten mittels eine Rakels durchgepresst wird und auf einer Oberfläche abgedruckt wird. Derartige gedruckte dreidimensionale Strukturen, die üblicherweise eine Dicke von 80 bis 300 µm aufweisen, lassen sich anschließend in einem Sinterverfahren zu dem Sintermetall-Bauteil verfestigen.

In einer vorteilhaften Ausgestaltungsform der Erfindung ist das beschriebene Sintermetall-Bauteil ein Magnetblech für ein Blechpaket eines Rotors einer elektrischen Maschine. Es weist dabei eine Bohrung für eine Welle auf. Insbesondere in Blechpaketen von Rotoren von elektrischen Maschinen, also Generatoren und Elektromotoren, werden hohe mechanische Belastungen hervorgerufen, wobei gleichzeitig sehr gute magnetische Eigenschaften zumindest lokal in dem Blechpaket oder dem Magnetblech vorliegen müssen.

In einer weiteren vorteilhaften Ausgestaltungsform der Erfindung weist die magnetische Materialkomponente einen gekrümmten Verlauf auf. Im speziellen Fall des Rotors eines Reluktanzmotors ist dieser gekrümmte Verlauf ist einem Kreis um den Mittelpunkt der Bohrung des Magnetbleches bzw. des Bauteils entgegengerichtet. Ein derartig gekrümmter für sich abgeschlossener Bereich der magnetischen Materialkomponente lässt eine sehr gute Flussführung zu, um die magnetischen Pole auszubilden.

Weitere Ausgestaltungsformen der Erfindung und weitere Merkmale werden anhand der folgenden Figurenbeschreibung näher erläutert. Dabei handelt es sich um rein schematische Ausgestaltungsformen, die keine Einschränkung des Schutzbereiches darstellen. Grundsätzlich sind die beschriebenen Sintermetall-Bauteile überall dort anwendbar, wo mechanische und magnetische Eigenschaften in bestimmten lokalen Bereichen eines Bauteils erforderlich sind, zweckmäßig. Eine Einschränkung auf Magnetbleche für elektrische Maschinen ist dabei nicht vorgesehen.

Dabei zeigen
- Figur 1: eine Explosionsdarstellung einer elektrischen Maschine in Form eines Elektromotors mit Rotor und Welle,
- Figur 2: eine schematische Darstellung eines herkömmlichen Blechpaketes mit einer Vielzahl von Magnetblechen nach dem Stand der Technik, wie sie in üblichen Elektromotoren verwendet werden,
- Figur 3: ein Sintermetall-Bauteil schematisch dargestellt mit einer magnetischen Komponente und einer tragenden Komponente,
- Figur 4: ein erstes Beispiel für ein Gefüge der Legierung der tragenden Komponente,
- Figur 5: ein weiteres Beispiel für ein Gefüge einer Legierung der tragenden Komponente mit austenitischen und ferritischen Anteilen,
- Figur 6: eine grafische Darstellung des thermischen Ausdehnungskoeffizienten verschiedener Materialien in Abhängigkeit von der Temperatur und
- Figur 7: eine grafische Darstellung des thermischen Ausdehnungskoeffizienten in Abhängigkeit eines Volumenanteils von keramischen Partikeln in der austenitischen Phase.

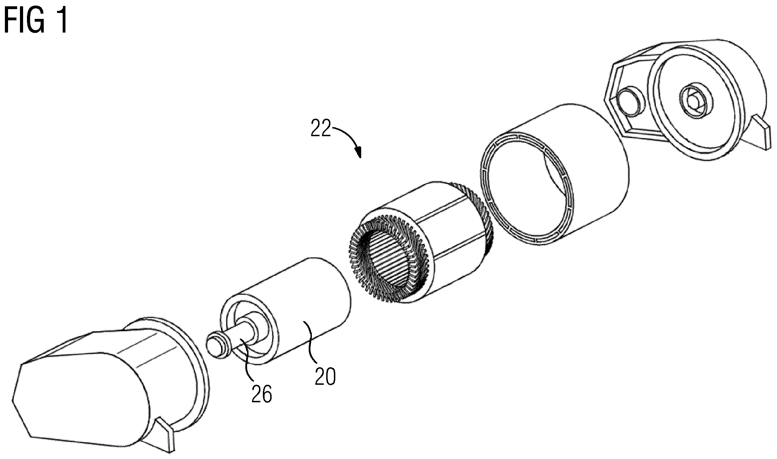

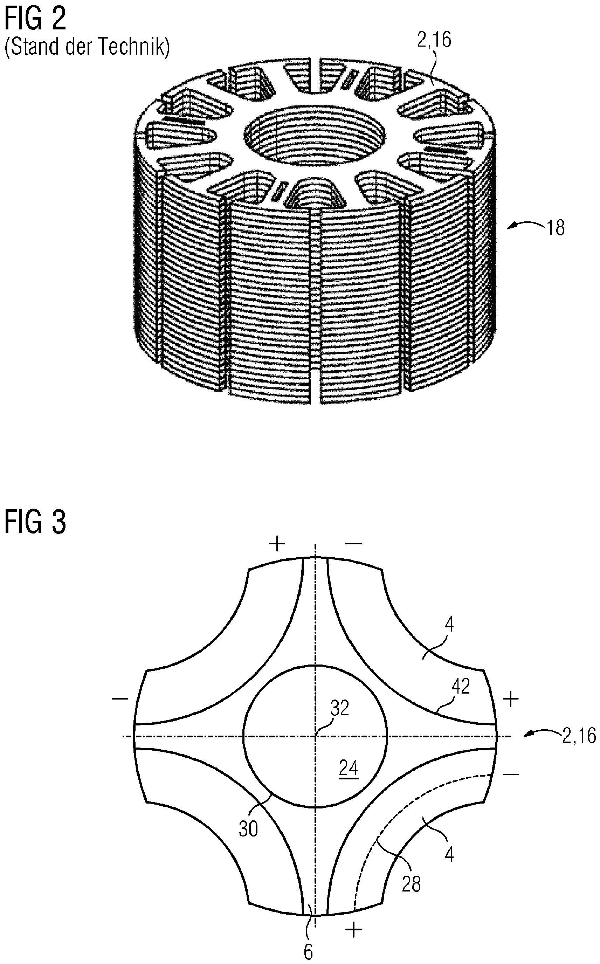

In Figur 1 ist eine Explosionsdarstellung einer elektrischen Maschine 22 in Form eines Elektromotors dargestellt. Auf die einzelnen Bestandteile, die hier visuell dargestellt sind, soll an dieser Stelle nicht näher eingegangen werden. Es sind exemplarisch übliche Bauteile einer elektrischen Maschine 22. Hervorgehoben werden soll ein Rotor 20 und eine Welle 26, auf dem der Rotor 20 montiert ist und die die Antriebswelle der elektrischen Maschine 22 ist. Dieser Darstellung ist sehr vereinfacht und daher ist zur Einordnung des im weiteren Beschriebenen in Figur 2 ein übliches Blechpaket 18 nach dem Stand der Technik dargestellt. In dieser Art können Blechpakete 18 mit einer Vielzahl von Magnetblechen 16 ausgestaltet sein. Die Magnetbleche 16 sind nach dem Stand der Technik üblicherweise als gestanzte Bleche ausgestaltet, im Kontext dieser Beschreibung sind die Magnetbleche 16 als Sintermetall-Bauteile 2 ausgestaltet.

In Figur 3 ist eine weitere vorteilhafte Ausgestaltungsform eines Sintermetall-Bauteils 2 in Form eines Magnetbleches 16 dargestellt. Dieses Magnetblech 16 weist dabei sowohl eine magnetische Materialkomponente 4 als auch eine tragende Materialkomponente 6 auf. Die tragende Materialkomponente 6 ist dabei im Zentrum des Magnetblechs 16 angeordnet. Sie weist eine Bohrung 24 auf, durch die in einem betriebsbereiten Zustand die hier nicht dargestellte Welle 26 (vgl. Figur 1) durchführbar ist. Die magnetischen Materialkomponenten 4 weisen einen gekrümmten Verlauf 28 auf, wobei die Krümmung 28 einem Kreis 30 um einen Mittelpunkt 32 der Bohrung 24 entgegenläuft. Eine derartige Krümmung 28 der magnetischen Materialkomponente 4 gewährleistet eine sehr gute Führung des magnetischen Flusses, um magnetische Pole auszubilden (die in Figur 3 durch + und - angedeutet sind). Insgesamt weist das Beispiel des Magnetbleches 16 in Figur 3 vier derartige magnetische Materialkomponenten 4 auf. Bei der Darstellung gemäß Figur 3 handelt es sich um eine reine exemplarische Ausgestaltungsform eines Sintermetall-Bauteils 2 in Form des Magnetblechs 16.

Das Charakteristische an dem Sintermetall-Bauteil 2 ist, dass zwei Materialkomponenten 4,6 mit grundlegend unterschiedlichen Materialeigenschaften in einem hier flächigen Bauteil 2 an einer Stoßkante 42 aufeinandertreffen. Die hier nicht dargestellte Grenzfläche der Stoßkante 42 stellt den Übergang zwischen zwei verschiedenen Werkstoffen dar, die in der Regel zwei unterschiedliche thermische Ausdehnungskoeffizienten aufweisen. Im Betrieb des Rotors 20 werden dabei insbesondere bei Hochleistungsmaschinen hohe Fliehkräfte eingebracht, die zu einer erheblichen Erwärmung des Rotors 20, insbesondere auch des Blechpaketes 18 führen. Das heißt, dass sich das Bauteil 2 als Teil eines Blechpaketes 18 thermisch ausdehnt, wobei es durch unterschiedliche thermische Ausdehnungskoeffizienten zu Spannungen an der Stoßkante 42 zwischen den beiden Materialkomponenten 4 und 6 kommt.

Der Grund weshalb zwei unterschiedliche Materialkomponenten verwendet werden, liegt darin, dass rein weichmagnetische Werkstoffe wie Eisen nicht die hohe Festigkeit aufweisen, dass sie den Belastungen bei der Rotation eines Hochleistungsmotors standhalten. Hierfür dient die tragende Materialkomponente 6. Für die tragende Materialkomponente 6 ist es zudem zweckmäßig, wenn diese überhaupt keine oder möglichst geringe weichmagnetische Eigenschaften aufweist, sodass der magnetische Fluss entlang der gekrümmten Linie 28 optimal zwischen zwei Polen Plus und Minus fließen kann. Hierdurch werden Wirbelstromverluste innerhalb des Magnetbleches 16 bzw. Blechpaketes 18 vermieden oder zumindest stark reduziert.

Grundsätzlich ist es jedoch bisher nicht gelungen, Materialien zu finden, wobei die eine Materialkomponente ausreichend mechanisch hoch belastbar ist und die andere Materialkomponente sehr gute weichmagnetische Eigenschaften aufweist. Dies ist nun somit zu gewährleisten, dass die magnetische Materialkomponente 4 einen möglichst hohen Eisenanteil aufweist, vorteilhaft ist ein Eisenanteil von mehr als 95 %, insbesondere kann dieser auch Kobalt oder zur Stabilisierung Silicium aufweisen. Hieraus wird die magnetische Materialkomponente 4 gebildet. Die tragende Materialkomponente 6 wiederum wird von einer Eisen-Chrom-Legierung gebildet, die ein charakteristisches Gefüge 8 aufweist, das zum einen eine austenitische Phase 10 und zum anderen eine ferritische Phase 12 umfasst. Es hat sich herausgestellt, dass ein derartiges Gefüge, bei dem der Volumenanteil der ferritischen Phase 12 am Gefüge 8 zwischen 60 Vol. % und 80 Vol. % beträgt, einen Ausdehnungskoeffizienten hervorrufen kann, der sehr nahe an dem des ferromagnetischen Eisenwerkstoffes liegt.

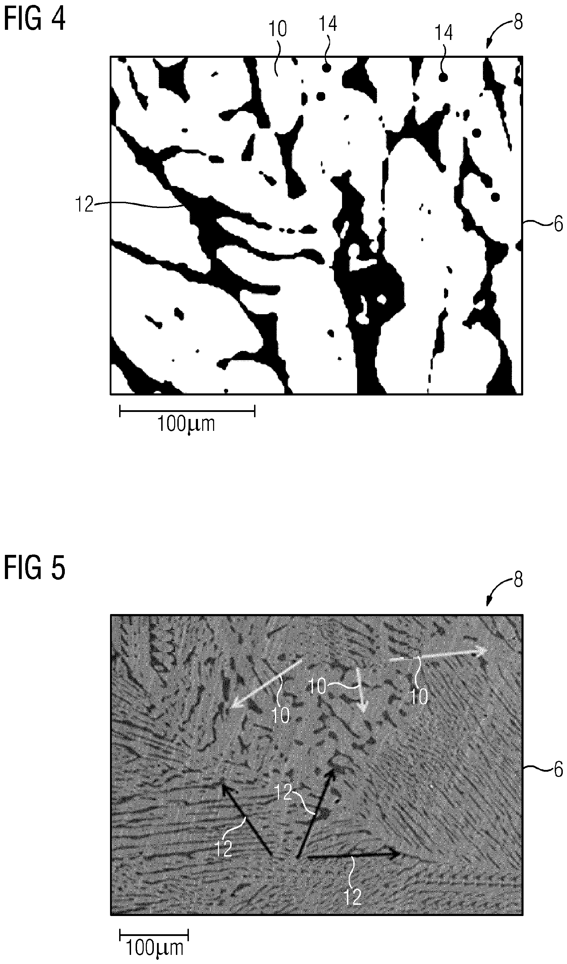

In den Figuren 4 und 5 sind typische Gefügebilder eines planaren Schliffes des Materials der tragenden Materialkomponente 6 dargestellt. Dabei ist der typische Verlauf der austenitischen Phase 10 und der ferritischen Phase 12 zu erkennen. Dabei ist die austenitische Phase 10 eher als eine Matrix zu sehen, in der ferritische Phasenanteile 12 ausgebildet sind. Die ferritischen Phasenanteile 12 sind dabei whiskerförmig ausgestaltet, d. h. sie haben eine längliche Struktur, wobei die Mehrzahl dieser ferritischen Strukturbestandteile 12 eine Länge zwischen 100 und 300 µm aufweisen. Ihr Aspektverhältnis ist aufgrund der länglichen Ausbildung größer als 5. Hierbei können auch dendritische Strukturen entstehen, die jeweils für sich genommen auch wieder eine whiskerförmige längliche Erstreckung mit dem beschriebenen Aspektverhältnis aufweisen. Das beschriebene Gefüge in den Figuren 4 und 5 weist die Besonderheit auf, dass in dem austenitischen Gefüge 10 die ferritischen Phasenbestandteile 12 so eingelagert sind, dass sie bei Ummagnetisierung also eine Umpolung während des Betriebs des Motors keine Veränderung ihrer Domänen herbeiführen, weshalb sie keine oder nur sehr geringe weichmagnetische Eigenschaften aufweisen. Das heißt, dass der gesamte Bereich der tragenden Materialkomponente 6 keine nennenswerten weichmagnetischen Eigenschaften aufweist und somit auch keine Störung des magnetischen Flusses, wie er in der magnetischen Materialkomponente 4 gewünscht ist, herbeiführt. Die tragende Materialkomponente 6 ist somit zumindest weitgehend magnetisch inaktiv und stellt lediglich die Tragstrukturen des Bauteils 2 dar.

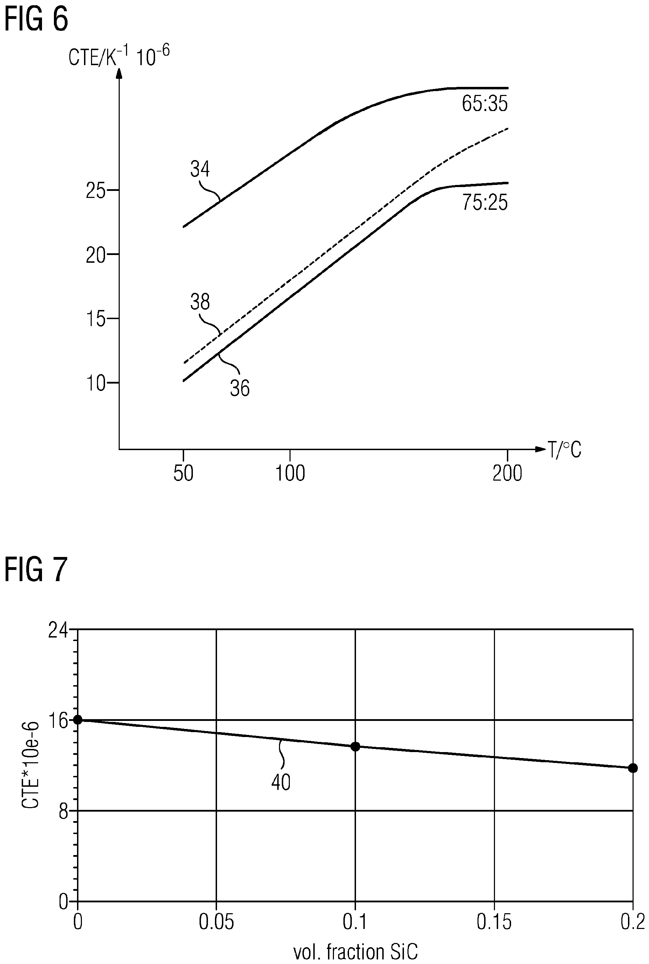

In Figur 6 ist ein Diagramm dargestellt, das in seiner X-Achse Temperatur aufzeigt und an der Y-Achse der thermische Ausdehnungskoeffizient CTE in der Einheit 10-6 K⁻¹ darstellt. Hierbei sind zwei verschiedene Eisen-Chrom-Legierungen der tragenden Materialkomponente 6 dargestellt. Diese sind mit den Bezugszeichen 34 und 36 versehen. Bei der ersten Legierung handelt es sich um eine Eisen-Chrom-Legierung, die 25 Gew.-% Chrom aufweist, die 7 Gew.-% Nickel aufweist und zudem noch mit Molybdän und Wolfram legiert ist. Interessant bei der Legierung ist neben der Zusammensetzung aber auch das Verhältnis zwischen der ferritischen Phase 12 und der austenitischen Phase 10. Bei der ersten Kurve 34 liegt die ferritische Phase 12 mit 65 Vol. % vor, die austenitische Phase weist 35 % am Volumen des Gefüges auf. Bei der zweiten Kurve einer zweiten tragenden Materialkomponente 36 liegt der ferritische Phasenanteil bei 75 Vol. %, der austenitische Phasenanteil bei 25 Vol. %. Zudem ist exemplarisch eine entsprechende Kurve 38 einer magnetischen Materialkomponente 4 gestrichelt aufgetragen. Es ist dabei anzumerken, dass diese Kurven 34, 36 und 38 zwar mit Werten in dem Diagramm versehen sind, trotzdem handelt es sich jedoch um Qualitativkurven, die lediglich grob den Verlauf und die mögliche Anpassung von thermischen Ausdehnungskoeffizienten bei den beschriebenen Materialien darstellen sollen.

Man kann an dieser Stelle gemäß Figur 6 erkennen, dass der Verlauf der magnetischen Materialkomponente 38 bezüglich der Temperatur und des sich dabei inneren thermischen Ausdehnungskoeffizienten sehr eng an der Kurve 36 der tragenden Materialkomponente 6 liegt, die einen ferritischen Anteil von 75 % gegenüber einem austenitischen Phasenanteil von 25 % aufweist. Je nachdem welches Material für die magnetische Materialkomponente 4 bzw. die tragende Materialkomponente 6 verwendet wird, können die beschriebenen Stähle an die tragende Materialkomponente entsprechend angepasst werden, sodass die entsprechenden Kuren des thermischen Ausdehnungskoeffizienten als Funktion der Temperatur so weit wie möglich aufeinander liegen, sodass an der beschriebenen Stoßkante 42 zwischen den beiden Materialkomponenten 4 und 6 eine möglichst geringe Missmatch zwischen den Ausdehnungskoeffizienten vorliegt.

Dabei ist anzumerken, dass die beschriebene Mikrostruktur des Gefüges 8 der tragenden Materialkomponente 6 nicht nur von der Zusammensetzung der Legierung an sich abhängt, sondern auch von dem Herstellungsprozess, der in Form eines Sinterprozesses erfolgt. Hierauf wird im Weiteren noch eingegangen werden. Es ist noch anzumerken, dass eine Feinabstimmung zwischen den thermischen Ausdehnungskoeffizienten der magnetischen Materialkomponente 4 und der tragenden Materialkomponente 6 noch dadurch in einem gewissen Bereich optimiert werden kann, indem in die austenitische Phase 10 des Gefüges 8 feine Partikel in geringem Umfang eingebracht werden. Dies ist in Figur 7 veranschaulicht. Dort ist anhand der Kurve 40 die Änderung des Ausdehnungskoeffizienten der tragenden Materialkomponente 6 in Abhängigkeit von der Zugabe von YSZ, TiC oder SiC-Partikeln dargestellt, die in der austenitischen Phase 10 des Gefüges 8 eingebettet sind. Eine Zugabe von sehr geringen Mengen bis zu 0,2 Vol. % kann dazu führen, dass der Ausdehnungskoeffizient von 16 × 10⁻⁶ K⁻¹ auf 11 × 10⁻⁶ K⁻¹ absinkt. Durch die Zugabe dieser geringen Mengen von Partikeln, beispielsweise Titancarbid, Yttrium stabiliertes Zirkonoxid oder Siliciumcarbid, kann der thermische Ausdehnungskoeffizient final so zwischen den beiden Materialkomponenten 4 und 6 angepasst werden, dass die thermischen Spannungen, die an der Stoßkante 42 auftreten, minimiert werden.

Im Weiteren soll noch auf eine mögliche Herstellung des Sintermetall-Bauteils 8 eingegangen werden, die sich insbesondere für die Darstellung von Magnetblechen 16 in Kombination der zwei funktionalen, voneinander getrennten, aber aneinander angrenzenden Materialkomponenten 4 und 6 ergibt. Hierzu wird insbesondere ein Siebdruck- oder ein Schablonendruckverfahren angewandt. Dazu werden zwei hier nicht dargestellte charakteristische Druckpasten hergestellt, die neben dem Grundmaterial der beiden Komponenten, der magnetischen Materialkomponente 4 und der tragenden Materialkomponente 6 entsprechende anorganische oder organische Bindemittel aufweist, die die Druckfähigkeit der Paste gewährleistet. Diese Pasten werden hintereinander mittels einer Schablone, gegebenenfalls mit Unterstützung eines Siebes auf eine ebene Oberfläche gedruckt. Dabei weist das gedruckte Material eine Dicke zwischen 100 µm und 300 µm, bevorzugt 200 µm auf. In diesem gedruckten Vorkörper sind die gemäß Figur 3 beschriebenen Materialkomponenten 4 und 6 bereits in der dort dargelegten Form voneinander getrennt aufgedruckt. Die Stoßkante 42 existiert hier bereits als Vorstufe nach dem Druckvorgang. Dieser so gedruckte Vorkörper wird nun von seinem Substrat, abgelöst und in einem Sinterofen thermisch behandelt.

Bei einer Sinterung handelt es sich dabei um einen thermischen Prozess, bei dem Materialkörner in ihrem Grenzbereich durch Diffusionsprozesse, gelegentlich auch durch Schmelzprozesse miteinander reagieren, wodurch sich Sinterhälse ausbilden und eine Verfestigung des Materials, insbesondere eine gering poröse Materialbeschaffenheit sich einstellt. Es handelt sich jedoch nicht um einen Schmelzprozess, in dem das Material homogen aufschmilzt und wieder erstarrt. Durch diesen Sinterprozess lässt sich durch eine relativ lange Abkühlphase beispielsweise im Bereich zwischen 2 und 9 Stunden in dem beschriebenen Sinterofen das gewünschte Gefüge 8, das eben diesen Anteil zwischen austenitischer Phase 10 und ferritischer Phase 12 umfasst, darstellen. Dabei lässt sich sowohl die magnetische Materialkomponente 4 und die tragende Materialkomponente 6 während eines gemeinsamen Wärmebehandlungsprozesses bzw. Sinterprozesses herstellen. Nach dem Sinterprozess wird das so gesinterte Magnetblech 16 entnommen und zu einem Magnetblechstapel 18 gestapelt, der als Rotor 20 der elektrischen Maschine 22 dienen kann.

### Bezugszeichenliste

- 2: Sintermetallbauteil
- 4: magnetische Materialkomponente
- 6: tragende Materialkomponente
- 8: Gefüge Eisen-Chrom-Legierung
- 10: austenitische Phase
- 12: ferritische Phase
- 14: keramische Partikel
- 16: Magnetblech
- 18: Blechpaket
- 20: Rotor
- 22: elektrische Maschine
- 24: Bohrung
- 26: Welle
- 28: gekrümmter Verlauf
- 30: Kreis
- 32: Mittelpunkt Bohrung
- 34: erste tragende Mut Komponente
- 36: zweite tragende Mut Komponente
- 38: dritte tragende Mut Komponente
- 40: Volumenanteil Partikel
- 42: Stoßkante

## Patentansprüche

1. Sintermetall-Bauteil umfassend zwei funktionale, voneinander getrennte, aneinander angrenzende Materialkomponenten (4, 6), wobei eine magnetische Materialkomponente (4) einen ferromagnetischen Eisenwerkstoff umfasst und eine tragende Materialkomponente (6), die eine Eisen-Chrom-Legierung umfasst, **dadurch gekennzeichnet, dass** die tragende Materialkomponente ein Gefüge (8) mit einer austenitische Phase (10) und eine ferritische Phase (12) aufweist, wobei die Volumenanteile der ferritischen Phase (12) am Gefüge (8) zwischen 60 Volumen % und 80 Volumen % betragen und die Volumenanteile der austenitischen Phase (10) zwischen 20 Volumen % und 40 Volumen % betragen.

2. Sintermetall-Bauteil nach Anspruch 1, **dadurch gekennzeichnet, dass** die magnetische Materialkomponente (4) einen Eisenanteil aufweist, der höher als 95 Gew. %, insbesondere höher als 98 Gew. % ist.

3. Sintermetall-Bauteil nach Anspruch 1 oder 2, **dadurch gekennzeichnet, dass** ferritischen Phasenanteile (12) des Gefüges (8) der tragende Materialkomponente (6) eine whiskerförmige Gestalt mit einem Aspektverhältnis größer als 5 aufweisen.

4. Sintermetall-Bauteil nach Anspruch 3, **dadurch gekennzeichnet, dass** die whiskerförmigen ferritischen Phasenbestandteile (12) zu 70 % eine Längenerstreckung aufweisen, die zwischen 100 µm und 300 µm liegt.

5. Sintermetall-Bauteil nach einem der vorhergehenden Ansprüche, **dadurch gekennzeichnet, dass** die Eisen-Chrom-Legierung der tragenden Materialkomponente (10) einen Chromanteil zwischen 22 Gew. % und 28 Gew. %, insbesondere zwischen 24 Gew. % und 26 Gew. % beträgt.

6. Sintermetall-Bauteil nach Anspruch 5, **dadurch gekennzeichnet, dass** die Eisen-Chrom-Legierung der tragenden Materialkomponente (8) einen Nickelanteil zwischen 4 Gew. % und 10 Gew. %, insbesondere zwischen 6 Gew. % und 8 Gew. % beträgt.

7. Sintermetall-Bauteil nach Anspruch 5 oder 6, **dadurch gekennzeichnet, dass** die Eisen-Chrom-Legierung der tragenden Materialkomponente einen Molybdänanteil zwischen 2 Gew. % und 5 Gew. %, insbesondere zwischen 3 Gew. % und 4 Gew. % beträgt.

8. Sintermetall-Bauteil nach einem der Ansprüche 5 bis 7, **dadurch gekennzeichnet, dass** die Eisen-Chrom-Legierung der mechanisch tragenden Materialkomponente einen Wolframanteil zwischen 0,3 Gew. % und 1,2 Gew. %, insbesondere zwischen 0,5 Gew. % und 1 Gew. % beträgt.

9. Sintermetall-Bauteil nach einem der vorhergehenden Ansprüche, **dadurch gekennzeichnet, dass** in der austenitischen Phase (10) keramische Partikel (14) eingelagert sind und der Volumenanteil der Partikel (14) zwischen 5 und 20 Volumen % beträgt.

10. Sintermetall-Bauteil nach Anspruch 9, **dadurch gekennzeichnet, dass** die keramischen Partikel (14) YSZ, TiC oder SiC umfassen.

11. Sintermetall-Bauteil nach einem der vorhergehenden Ansprüche, **dadurch gekennzeichnet, dass** das Bauteil (2) ein flächiges Bauteil (2) ist.

12. Sintermetall-Bauteil nach einem der vorhergehenden Ansprüche, **dadurch gekennzeichnet, dass** das Bauteil (2) ein Siebdruck und/oder Schablonendruck Bauteil (2) ist.

13. Sintermetall-Bauteil nach einem der vorhergehenden Ansprüche, **dadurch gekennzeichnet, dass** das Bauteil (2) ein Magnetblech (16) für ein Blechpaket (18) eines Rotors (20) einer elektrischen Maschine (22) ist und eine Bohrung (24) für eine Welle (26) aufweist.

14. Sintermetall-Bauteil nach Anspruch 13 **dadurch gekennzeichnet, dass** die magnetische Materialkomponente (4) einen gekrümmten Verlauf (28) aufweist, der einem Kreis um den Mittelpunkt (32) der Bohrung (24) entgegengerichtet ist.

15. Sintermetall-Bauteil nach Anspruch 13 **dadurch gekennzeichnet, dass** vier Bereiche mit der magnetischen Materialkomponente (4) vorgesehen sind.
